# FASCICULE DE BREVET EUROPEEN

(11) **EP 1 116 675 B1**
(45) Date de publication et mention de la délivrance du brevet: **04.10.2006**
(21) Numéro de dépôt: 00403686.9
(22) Date de dépôt: 27.12.2000
(51) Int. Cl.: B65G 47/08, B65B 21/24, B65G 47/84

(54) **Dispositif pour la constitution de lots successifs d'articles comprenant des moyens de transfert des articles**
Vorrichtung zur Bildung von aufeinanderfolgenden Gruppen von Artikeln mit Mitteln zur Überführung der Artikel
Device for forming successive article batches comprising article transfer means

(30) Priorité: 29.12.1999 FR 9916658; 29.12.1999 FR 9916660; 21.06.2000 FR 0007945
(43) Date de publication de la demande: 18.07.2001
(73) Titulaire: ARIES PACKAGING, 10430 Rosieres-Pres-Troyes (FR)
(72) Inventeur: de Guglielmo, Pascal, 10300 Montgueux (FR); Cartier, Alain, 10190 Fontvannes (FR)
(74) Mandataire: Geismar, Thierry

(56) Documents cités:
- EP-A- 0 585 822
- EP-A- 0 654 408
- US-A- 4 274 533
- US-A- 5 070 995
- US-A- 5 784 857
- US-A- 5 979 147

## Description

L'invention concerne un dispositif pour la constitution de lots successifs d'articles.

L'invention s'applique notamment au conditionnement d'articles tels que des bouteilles, des canettes ou des pots (tels que des pots de yaourt), généralement de forme cylindrique.

Il est connu que les articles sont d'abord acheminés individuellement sur une voie d'alimentation jusqu'à un poste de groupage où des lots d'articles sont formés puis espacés pour être transférés vers une voie d'évacuation le long de laquelle ils sont emballés, ou empaquetés.

Pour former un espace entre deux lots d'articles successifs, il est connu d'accélérer les lots d'articles entre la voie d'alimentation et la voie d'évacuation.

Les distributeurs cherchent à l'heure actuelle à diminuer leurs stocks tout en proposant des gammes de produits emballés toujours plus diversifiées.

Il en résulte que les débits des machines de conditionnement doivent être continuellement revus à la hausse. Ainsi, dans le domaine du conditionnement des bouteilles ou des canettes, on atteint à l'heure actuelle des débits de l'ordre de 15 000 à 100 000 bouteilles par heure.

Dans des installations connues, les articles sont groupés notamment au moyen de dispositifs de groupage comprenant des organes de préhension circulant à vitesse constante le long d'une trajectoire fermée.

Pour illustrer ce type de technologie, on peut citer notamment le document GB-914 995.

Ces organes de préhension circulent à une vitesse nettement supérieure à celle des articles avant leur groupage.

De ce fait, les articles subissent des chocs violents contre les organes de préhension, ce qui, dans le cas de bouteilles de verre dont l'épaisseur tend à diminuer, provoque un taux de casse important et limite le débit et la cadence de l'installation.

On connaît déjà des dispositifs de groupage d'articles permettant de limiter les chocs, tel que celui décrit dans le document US5 979 147.

Le dispositif décrit dans ce document comprend un disque rotatif portant des doigts venant en prise avec les articles. Les articles sont accélérés entre l'entrée et la sortie du dispositif par l'extension de la longueur des doigts saillant du disque.

Ce type de dispositif ne permet toutefois pas de réduire notablement les chocs des doigts contre les articles. En effet, en fonction du nombre d'articles par lot, les doigts vont venir en prise avec les articles en différents points du disque rotatif de sorte que l'impact des doigts sur les articles va varier et générer des chocs plus ou moins importants.

L'invention vise à résoudre notamment les inconvénients précités de l'art antérieur, en proposant un dispositif et une installation qui permettent de former des lots à partir d'articles individuels sans provoquer d'à coups lors du groupage des articles, et qui permette de dépasser les cadences de production connues.

A cet effet, un premier objet de l'invention est un dispositif pour la constitution de lots successifs d'articles, qui comprend :
- une voie d'alimentation le long de laquelle les articles sont acheminés un à un jusqu'à un poste d'alimentation à une vitesse dite d'entrée sensiblement constante;
- une voie d'évacuation apte à recevoir, à un poste d'évacuation, les lots d'articles successifs pour les acheminer à une vitesse dite de sortie supérieure à la vitesse d'entrée ;
- des moyens de transfert des articles depuis le poste d'alimentation vers le poste d'évacuation, comprenant un organe rotatif apte à prendre et à grouper les articles pour former des lots espacés, la vitesse de l'organe rotatif étant supérieure à la vitesse d'entrée des articles et l'organe rotatif permettant de faire varier le nombre d'articles par lot, ledit organe rotatif comprenant une roue dentée dont une partie au moins est montée pivotante autour d'un axe de rotation, cette roue étant disposée à proximité de la voie d'alimentation et de la voie d'évacuation et comprenant une succession d'organes de préhension agencés pour engager les articles au poste d'alimentation et à les désengager au poste d'évacuation, lesdits organes de préhension étant entraînés en continu le long d'un chemin fermé, à une vitesse dite de transfert, supérieure ou égale à la vitesse d'entrée ;
les moyens de transfert étant agencés pour que la vitesse de transfert des organes de préhension soit non constante, telle que :
- lors de l'engagement des articles, la vitesse des organes de préhension soit sensiblement égale à la vitesse d'entrée ;
- lors du transfert des articles, la vitesse des organes de préhension soit supérieure à la vitesse d'entrée ;
- lors du désengagement des articles, la vitesse des organes de préhension soit sensiblement égale à la vitesse de sortie;
lesdits organes de préhension se présentant sous la forme de dents sensiblement régulièrement espacées, saillant radialement de la roue dentée, chaque dent décrivant un cercle en passant par une première position angulaire dans laquelle elle engage au moins un article au poste d'alimentation, et une deuxième position angulaire dans laquelle elle désengage celui-ci au poste d'évacuation, les articles étant entraînés en continu le long dudit chemin fermé suivant une trajectoire qui suit au moins un quart de la périphérie de l'organe rotatif.

De la sorte, les articles sont engagés en douceur, puis accélérés progressivement, ce qui minimise les risques de casse et permet d'augmenter sans crainte les cadences de production.

Par ailleurs, ce dispositif est plus silencieux que les dispositifs existants, ce qui est dû notamment à l'absence de choc des organes de préhension contre les articles.

L'écart angulaire entre les première et deuxième positions angulaires peut être compris entre 90 et 180 degrés, par exemple sensiblement égal à 120 degrés.

Selon un mode de réalisation, la roue comprend un socle fixe circulaire ainsi qu'un disque rotatif, coaxiaux et superposés, entre lesquels sont disposées des branches radiales dont les extrémités libres forment les dites dents.

Selon une disposition constructive particulière, les dites branches sont montées à rotation sur le disque au moyen de pivots d'axes parallèles à l'axe de la roue.

Par exemple, chaque branche comporte un galet ou un ergot qui coopère avec une gorge ménagée dans le socle, cette gorge étant étendue en boucle fermée autour de l'axe de rotation de la roue.

Cette gorge est agencée pour que:
- lors du passage de la dent par le poste d'alimentation, la branche qui la porte pivote dans le sens contraire de la rotation de la roue pour que la vitesse de la dent diminue jusqu'à être sensiblement égale à la vitesse d'entrée lors de l'engagement des articles ;
- entre le poste d'alimentation et le poste d'évacuation, l'orientation de ladite branche étant constante par rapport à la roue, de sorte que la vitesse de la dent augmente jusqu'à être sensiblement égale à la vitesse de la roue dentée, de sorte que les articles sont groupés en lots, accélérés, espacés.

Selon un mode de réalisation, la gorge forme dans le socle un chemin de came continu suivi par le galet qui forme suiveur de came, ce chemin de came comprenant deux portions connexes dont l'une, tournée vers le poste d'alimentation, présente une courbure variable, et l'autre, tournée vers le poste d'évacuation, présente une courbure sensiblement constante, de sorte que:
- lors du passage du galet dans la portion à courbure variable, la branche qui le porte pivote autour de son axe ;
- lors du passage du galet dans la portion à courbure constante, l'orientation de la branche est sensiblement constante.

Les dents comprennent par exemple une surface de guidage apte à coopérer avec une circonférence du socle.

Peuvent en outre être prévus des moyens disposés à proximité du poste d'alimentation, aptes à ordonner et cadencer les articles en provenance de la voie d'alimentation, pour qu'ils présentent le positionnement et l'écartement voulus au moment de leur préhension par les moyens de transfert.

Selon un mode de réalisation, ces moyens pour ordonner et cadencer les articles se présentent sous la forme d'une roue étoilée, montée pivotante autour d'un axe de rotation, comprenant à sa périphérie une denture apte à engrener et désengrener les articles, la denture présentant des logements aptes à recevoir individuellement les articles, la vitesse tangentielle de la dite roue étant sensiblement égale à la vitesse d'entrée.

On peut également prévoir un moyen d'entraînement de la dite roue étoilée et/ou un moyen d'entraînement de la roue dentée, relié à un dispositif de commande agencé pour appliquer au dit moyen d'entraînement un profil de vitesse prédéterminé, choisi parmi un ensemble préprogrammé de profils de vitesses ;

Le ou chaque moyen d'entraînement peut comprendre au moins un moteur dont la vitesse de rotation est réglable de façon continue, tel qu'un moteur électrique, du type à courant continu sans balais.

D'autres objets et avantages de l'invention apparaîtront au cours de la description qui va suivre de modes de réalisation, description faite en référence aux dessins annexés, dans lesquels:

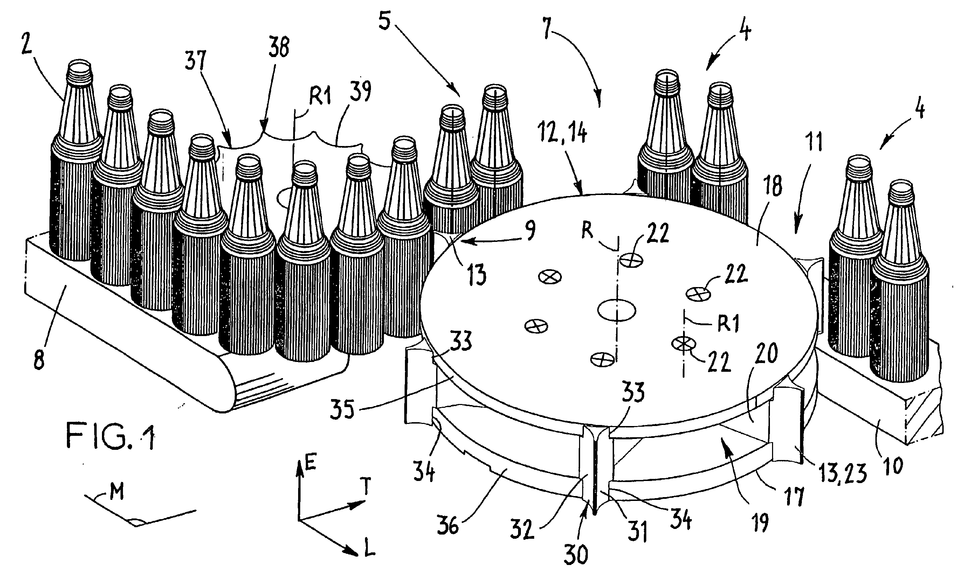

- la figure 1 est une vue en perspective d'un mode de réalisation du dispositif pour la constitution de lots successifs d'articles qui comprend des moyens de transfert des articles, selon un mode de réalisation où ils comprennent une roue dentée qui comporte un socle et un disque tournant, ainsi que des branches montées pivotantes sur le disque, dont les extrémités libres forment moyens de préhension des articles pour assurer leur transfert ; une gorge est pratiquée dans le socle, avec laquelle coopèrent des galets dont sont pourvues les branches ;

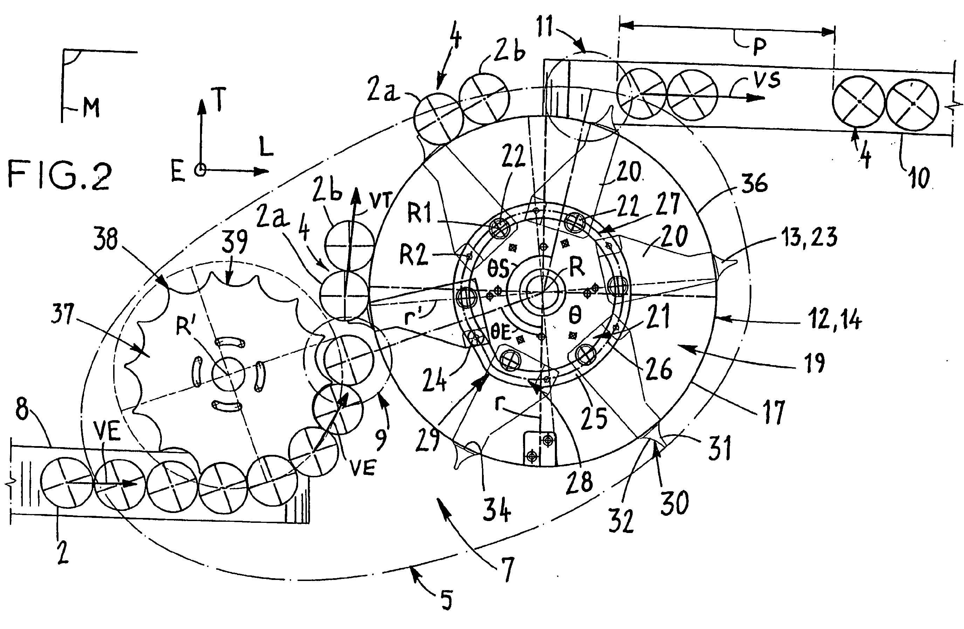

- la figure 2 est une vue en plan de dessus du dispositif de la figure 1, où le disque tournant n'est pas visible pour laisser apparaître les branches ;

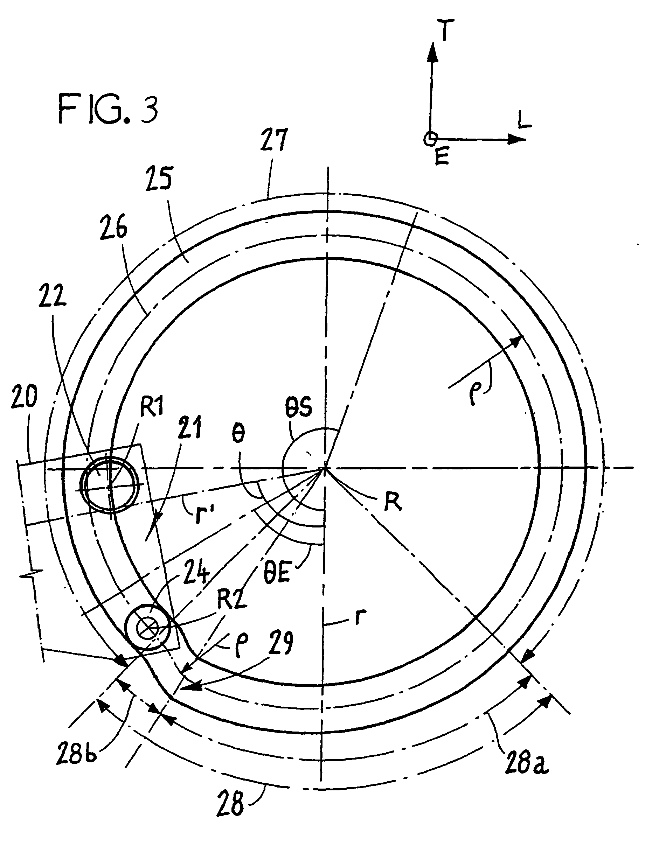

- la figure 3 est une vue d'un détail de la figure 1, qui montre la gorge pratiquée dans le socle de la roue dentée ; sur cette figure une branche est représentée partiellement, son extrémité intérieure, tournée vers l'axe de la roue, comporte un galet qui circule dans la gorge ; la gorge comprend une portion à courbure constante et une portion à courbure variable ; la branche est représentée dans une position où son galet, qui circule par exemple dans le sens des aiguilles d'une montre, vient de quitter la portion à courbure variable et est engagé dans la portion à courbure constante ; et

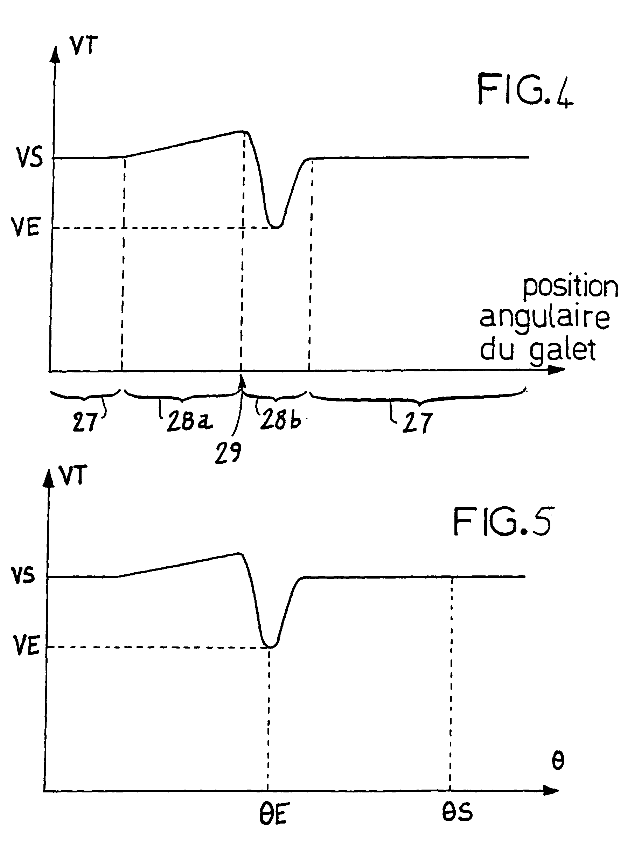

- les figures 4 et 5 sont des graphiques représentant la vitesse d'un organe de préhension porté par une branche telle que représentée sur la figure 2, en fonction respectivement de la position angulaire du galet de la branche, et de la position angulaire de l'organe de préhension ; sur la figure 4 sont représentées schématiquement sous forme d'accolades les portions de la gorge avec lesquelles coopère successivement le galet lors de la rotation de la roue dentée sur un tour.

Sur la figure 1 est représenté un dispositif 1 pour la constitution de lots 4 successifs d'articles 2 tels que des bouteilles ou des canettes, à partir desquels sont formés des produits finis tels que des packs 3.

Pour être conditionnés, les articles 2 subissent au moins une opération de groupage par lots 4 espacés, opération qui, pour plus de commodité, est supposée avoir lieu dans un plan M sensiblement horizontal.

Cette opération a lieu dans une zone de groupage 5 vers laquelle les articles 2 sont acheminés le long d'un chemin de convoyage selon une direction longitudinale L contenue dans le plan M, et représentée sur les figures.

Les articles 2 repartent groupés de la zone de groupage 5 en étant acheminés par lots 4, par exemple selon la direction longitudinale L.

Sur les figures sont également représentées une direction transversale T, sensiblement perpendiculaire à la direction longitudinale L en étant contenue dans le plan M, ainsi qu'une direction d'élévation E perpendiculaire aux deux autres L, T, de sorte que les directions L, T, E forment dans l'espace un repère orthogonal direct par rapport auquel est effectuée la présente description.

Les termes « amont », «aval» sont définis par rapport à la direction longitudinale L; le terme « latéral » est défini par rapport à la direction transversale T, les termes « au-dessus », « au-dessous » étant définis par rapport à la direction E d'élévation.

Chaque lot 4 comprend un nombre prédéterminé d'articles alignés 2. Ce nombre peut varier entre 2 et 6, ou plus.

Chaque pack 3 comprend quant à lui au moins un lot 4 d'articles 2. Pour que le pack 3 comprenne au moins deux lots 4 parallèles d'articles 2, on peut prévoir plusieurs chemins de convoyage convergents (non représentés), pour former des séries séparées de lots 4 successifs qui sont ensuite regroupés.

Pour former des packs 3 comprenant deux lots 4 identiques d'articles 2 alignés, on peut ainsi prévoir, par exemple, deux chemins de convoyage symétriques par rapport à un plan d'élévation longitudinale, pour la formation de deux séries distinctes de lots 4.

### 1

Le dispositif 1 pour la constitution des lots 4 est disposé sensiblement dans la zone de groupage 5. ll1 comprend une voie d'alimentation 8 le long de laquelle les articles 2 sont acheminés un à un jusqu'à un poste d'alimentation 9, situé dans la zone de groupage 5, et par exemple confondu avec une extrémité de la voie d'alimentation 8.

Les articles 2 sont acheminés à une vitesse d'entrée VE sensiblement constante le long de la voie d'alimentation 8, en étant juxtaposés les uns aux autres, au moyen d'un tapis roulant motorisé ou de tout autre moyen équivalent.

Le dispositif 1 comprend également une voie d'évacuation 10, apte à recevoir, à un poste d'évacuation 11 situé dans la zone de groupage 5, les articles 2 groupés par lots 4 pour les acheminer depuis l'amont vers l'aval à une vitesse dite de sortie VS sensiblement constante, supérieure à la vitesse d'entrée VE.

Le dispositif 1 comprend en outre des moyens de transfert 12 des articles 2 depuis le poste d'alimentation 9 vers le poste d'évacuation 11, qui prennent les articles 2 au poste d'alimentation 9 et les groupent en formant les lots 4 espacés.

Les moyens de transfert 12 sont agencés pour que le nombre d'articles 2 par lot 4 soit variable sans arrêter le défilement desdits articles.

A cet effet, selon un mode de réalisation, les moyens de transfert 12 comprennent un organe rotatif apte à prendre et grouper les articles (2) pour former des lots (4) espacés, le dit organe rotatif comprenant une succession d'organes de préhension 13 qui engagent les articles 2 au poste d'alimentation 9 et les désengagent au poste d'évacuation 11 après qu'ils ont été groupés par lots 4 et espacés.

L'organe rotatif permet de faire varier le nombre d'articles 2 par lot.

Entre le poste d'alimentation 9 et le poste d'évacuation 11, les articles 2 sont entraînés en continu le long d'un chemin fermé qui selon une trajectoire qui suit au moins un quart de la périphérie de l'organe rotatif, de sorte que les organes de préhension 13 puissent entrer en contact avec les articles et les grouper en lots 4 successifs.

La vitesse de l'organe rotatif est supérieure à la vitesse d'entrée (VE) des articles.

Les organes de préhension 13 sont entraînés et circulent le long d'une trajectoire en boucle fermée à une vitesse VT dite de transfert.

Cette vitesse de transfert VT est supérieure ou égale à la vitesse d'entrée VE, de sorte que les articles sont accélérés entre le poste d'alimentation 9 et le poste d'évacuation 11.

Les vitesses d'entrée VE et de sortie VS étant prédéfinies, les moyens de transfert 12 sont agencés pour que la vitesse de transfert VT des organes de préhension 13 varie le long de leur trajectoire, de sorte que:
- lors de l'engagement des articles 2 au poste d'alimentation 9, la vitesse de transfert VT soit sensiblement égale à la vitesse d'entrée VE ;
- lors du transfert des articles 2, c'est-à-dire entre le poste d'alimentation 9 et le poste d'évacuation 11, la vitesse de transfert VT soit supérieure à la vitesse d'entrée VE ; et
- lors du désengagement des articles 2 au poste d'évacuation 11, la vitesse de transfert VT soit sensiblement égale à la vitesse de sortie VS.

Ainsi, l'engagement et le dégagement des articles 2 sont effectués sans choc et sans à-coups.

Selon un mode de réalisation, illustré sur les figures 1 et 2, les moyens de transfert 12 comprennent une roue dentée 14 montée au moins en partie pivotante autour d'un axe R de rotation sensiblement vertical, perpendiculaire au plan M, et entraînée en rotation par un moyen d'entraînement 15, tel qu'un moteur 16.

Cette roue dentée 14 est disposée dans la zone de transfert 5, à proximité de la voie d'alimentation 8 et de la voie d'évacuation 10, par exemple adjacente à elles.

Selon un mode de réalisation, les organes de préhension 13 se présentent sous la forme de dents 13 régulièrement espacées, par exemple au nombre de six, saillant radialement de la roue dentée 14.

Lors de la rotation de la roue 14 autour de son axe R, chaque dent 13 décrit un cercle, en passant par une première position angulaire θE dans laquelle elle engage, au poste d'alimentation 9, au moins un article 2 en provenance de la voie d'alimentation 8, et une deuxième position angulaire θS dans laquelle elle désengage l'article 2 au poste d'évacuation sur la voie d'évacuation 10.

Pour chaque dent 13, on note θ sa position angulaire par rapport à l'axe R de rotation de la roue dentée 14, cette position angulaire θ étant définie arbitrairement comme l'écart angulaire séparant un rayon r transversal fixe de la roue dentée 14, et un rayon mobile r' passant par la dent 13.

L'écart angulaire entre les première et deuxième positions angulaires θE, θS est par exemple compris entre 90 degrés et 180 degrés environ.

Selon un mode de réalisation, cet écart angulaire est d'environ 120 degrés, tel qu'il apparaît sur les figures 2 et 3.

La vitesse de transfert VT est la vitesse tangentielle des dents 13 lors de la rotation de la roue 14.

Les variations de la vitesse de transfert VT de la dent 13 en fonction de sa position angulaire θ peuvent être définies comme suit.

Lorsque θ est sensiblement égal à θE, la vitesse de transfert VT est sensiblement égale à la vitesse d'entrée VE des articles.

De la sorte, la dent 13 engage au moins deux articles 2 de manière continue, sans les heurter (figures 1 et 2), en formant un lot 4 d'articles groupés.

La vitesse de transfert VT croît alors de manière continue avec la position angulaire θ, pour atteindre une valeur sensiblement égale à la vitesse de sortie VS.

Ainsi, un espace est créé entre le lot 4 et les articles 2 encore sur la voie d'alimentation 8.

Le lot 4 atteint alors le poste d'évacuation 11 où il est disposé sur la voie d'évacuation 10 qui le prend en charge à vitesse constante VS, tandis que la dent 13 s'en désengage.

Selon un mode de réalisation, décrit à présent en référence aux figures 1 à 3, la roue dentée 14 comprend un socle fixe 17 circulaire ainsi qu'un disque rotatif 18 appelé platine dans la suite de la description.

Le socle 17 et la platine 18 sont sensiblement coaxiaux d'axe R et superposés, la platine 18 étant disposée au dessus du socle 17 ; ils définissent entre eux une enceinte 19 sensiblement cylindrique.

Une localisation à proximité de l'axe R est dite intérieure, par opposition à une localisation à distance de l'axe R, dite extérieure.

Des branches radiales 20 disposées en étoile sont insérées dans l'enceinte 19 entre le socle 17 et la platine 18.

Chaque branche 20 possède d'une part une extrémité 21 tournée vers l'intérieur, fixée à la platine 18 au moyen d'un pivot 22 d'axe R1 parallèle à l'axe R, l'ensemble des pivots 22 étant inscrit dans un cercle d'axe R.

Chaque branche 20 possède d'autre part une extrémité libre 23 tournée vers l'extérieur, saillant radialement de l'enceinte 19 pour former la dent 13 décrite ci-dessus.

La rotation de la platine 18 autour de son axe R entraîne la rotation des branches 20 dans un mouvement circulaire d'axe R, chaque branche 20 balayant dans son mouvement l'espace défini par l'enceinte 19.

Le pivotement de chaque branche 20, autour de son axe R1, par rapport à la platine 18, est commandé par un galet 24 ou un ergot d'axe R2 parallèle à l'axe R, fixé à l'extrémité intérieure de la branche 20, à distance du pivot 22.

Chaque galet 24 coopère avec une gorge 25 formant came, ménagée dans le socle 17, dans laquelle le galet 24 circule lors de la rotation de la platine 18, cette gorge 25 étant étendue en boucle fermée autour de l'axe R de rotation de la roue dentée 14.

Cette gorge 25 forme dans le socle un chemin de came 26 continu, suivi par le galet 24 qui forme ainsi suiveur de came.

Cette gorge 25 est agencée pour que:
- lors du passage de la dent 13 par le poste d'alimentation 9, la branche 20 qui la porte pivote dans le sens contraire de la rotation de la roue 14 pour que la vitesse de la dent 13 diminue jusqu'à être sensiblement égale à la vitesse d'entrée VE lors de l'engagement des articles ; et
- selon un premier mode de réalisation, entre le poste d'alimentation 9 et le poste d'évacuation 11, la dite branche 20 pivote dans le sens de la rotation de la roue 14 pour que la vitesse de la dent 13 augmente jusqu'à être sensiblement égale à la vitesse de sortie VS, de sorte que les articles sont groupés en lots, accélérés, espacés ;
- selon un deuxième mode de réalisation, entre le poste d'alimentation 9 et le poste d'évacuation 11, l'orientation de ladite branche 20 étant constante par rapport à la roue 14, de sorte que la vitesse de la dent 13 augmente jusqu'à être sensiblement égale à la vitesse de la roue dentée 14, de sorte que les articles sont groupés en lots, accélérés, espacés.

Le second mode de réalisation est maintenant décrit en détail.

Le chemin de came 26 a une forme pseudo circulaire d'axe R, et comprend deux portions connexes:
- une première portion 27 de courbure sensiblement constante, c'est-à-dire sensiblement circulaire d'axe R, s'étendant sur environ un demi tour à trois quarts de tour autour de l'axe R, tournée vers le poste d'évacuation 11 ;
- une deuxième portion 28 présentant une courbure variable, s'étendant sur environ un quart de tour à un demi tour autour de l'axe R, et tournée vers le poste d'alimentation 9.

Le chemin de came 26 présentant un rayon de courbure ρ (figure 3), on rappelle que la courbure du chemin de came 26 est définie par l'inverse 1/ρ du rayon de courbure ρ.

De la sorte:
- lors du passage du galet 24 dans la portion 27 à courbure constante, l'orientation de la branche 20 est sensiblement constante, la vitesse VT de la dent 13 étant de ce fait sensiblement constante ;
- lors du passage du galet 24 dans la portion 28 à courbure variable, la branche 20 pivote autour de son axe R1, la vitesse VT de la dent 13 variant en conséquence.

Selon un mode de réalisation illustré sur la figure 3, la portion 28 comprend :
- une première partie 28a adjacente à la portion 27 à courbure constante, et s'étendant angulairement sur environ un quart de tour ; et
- une deuxième partie 28b située à proximité du poste d'entrée 9, entre la première partie 28a et la portion 27 à courbure constante, et qui s'étend angulairement sur quelques degrés, par exemple une dizaine environ.

La première partie 28a présente une courbure croissant sensiblement linéairement depuis la portion 27 à courbure constante jusqu'à la seconde partie 28b, de sorte à former un arc de spirale d'axe R.

La deuxième partie présente quant à elle une courbure qui décroît depuis la première partie 28a jusqu'à la portion 27 à courbure constante.

En outre, la portion 28 à courbure variable comprend une chicane 29 située à proximité du poste d'alimentation 9, à la jonction entre la première partie 28a et la deuxième partie 28b.

Lorsque le galet 24 quitte la portion 27 et s'engage dans la première partie 28a, celle-ci le force à s'éloigner de l'axe R, de sorte que la branche 20 pivote dans le sens de rotation de la platine 18, la vitesse de transfert VT de la dent 13 étant alors croissante (figures 4 et 5).

La dent 13 prend donc de l'avance par rapport à la platine 18.

Lorsque le galet 24 passe la chicane 29 puis s'engage dans la deuxième partie 28b, celle-ci le force à se rapprocher de l'axe R, de sorte que la branche 20 pivote dans le sens inverse de la rotation de la platine 18, la vitesse de transfert VT de la dent 13 étant alors décroissante.

La vitesse VT de la dent décroît jusqu'à être sensiblement égale à la vitesse d'entrée VE lors du passage de la dent 13 par le poste d'alimentation 11, pour assurer la préhension sans à-coup des articles 2, le galet étant alors sensiblement au milieu de la deuxième partie 28b (figures 3 à 5).

La dent 13 perd donc son avance, et prend du retard par rapport à la platine 18.

En retrouvant la portion circulaire 27, le galet 24 force la branche 20 à garder une orientation constante par rapport à la roue dentée, de sorte que la vitesse VT de la dent 13 augmente sensiblement jusqu'à la vitesse de la roue dentée 14, sensiblement égale à la vitesse de sortie VS, les articles 2 étant groupés en lots 4, accélérés et espacés.

Suivant le premier mode de réalisation, en retrouvant la portion circulaire 27, le galet 24 force la branche 20 à pivoter autour de son axe R1 dans le sens de la rotation de la platine 18, de sorte à accélérer progressivement la dent 13 pour que sa vitesse VT augmente sensiblement jusqu'à la vitesse de sortie VS, les articles 2 étant groupés en lots 4, accélérés et espacés.

Dans les deux modes de réalisation, la dent 13 récupère donc son retard par rapport à la platine 18.

En formant suiveur de came, le galet 24 permet donc de réguler la vitesse de transfert VT de la dent 13 lors de la rotation de la platine 18.

Le réglage de la roue dentée 14 pour permettre notamment le changement du nombre d'articles 2 par lot 4 est effectué en décalant angulairement le socle 17 de façon à décaler angulairement le chemin de came 26:
- dans le sens de la rotation de la platine 18 pour diminuer le nombre d'articles 2 par lot 4 ; ou
- dans le sens inverse de la rotation de la platine 18 pour augmenter le nombre d'articles 2 par lot 4 ; et
en faisant varier le rapport entre les vitesses d'une roue étoilée 37 (définie ci-après) et de la roue 14.

Ainsi, par exemple, pour grouper n articles successifs, les vitesses relatives sont telles qu'une dent 13 engage 1 article 2 tous les n articles 2 avancés par la roue étoilée 37.

Il est ainsi possible de changer facilement et rapidement le nombre d'articles par lot.

Par ailleurs, afin de faciliter la préhension des articles 2, les dents 13 sont étendues selon une direction d'élévation, et présentent une surface 30 apte à épouser la forme des articles 2.

Selon un mode de réalisation, les dents 13 présentent deux surfaces extérieures opposées 31, 32 incurvées pour épouser la forme d'un article 2 cylindrique, ainsi que deux surfaces de guidage supérieure 33 et inférieure 34 saillant verticalement de part et d'autre de chaque branche 20.

Les surfaces de guidage 33, 34 sont étendues tangentiellement par rapport à la roue 14, et sont en appui respectivement sur une circonférence 35 de la platine 18 et sur une circonférence 36 du socle 17, sur lesquelles elles glissent lors de la rotation de la platine 18 par rapport au socle 17.

Afin d'ordonner et cadencer les articles 2 en provenance de la voie d'alimentation 8 pour qu'ils présentent le positionnement et l'écartement voulus lors de l'engagement par les dents 13, le dispositif 1 peut en outre comprendre une roue étoilée 37.

La roue étoilée 37 est montée pivotante autour d'un axe de rotation R' sensiblement parallèle à l'axe R de rotation de la roue dentée 14.

Selon un mode de réalisation, illustré sur les figures 1 et 2, la roue étoilée 37 comprend à sa périphérie une denture 38 qui engrène les articles 2 en provenance de la voie d'alimentation 8, et les désengrène au poste d'alimentation 9 pour permettre leur préhension par les dents 13 de la roue dentée 14.

A cet effet, la denture 38 comporte des logements 39 aptes à recevoir individuellement les articles 2, la forme de chaque logement 39 étant sensiblement complémentaire d'un article 2.

Afin d'assurer un mouvement continu des articles 2, la vitesse tangentielle de la roue étoilée 37, ou des logements 39, est sensiblement égale à la vitesse d'entrée VE.

La rotation de la roue étoilée 37 peut être assurée par un moyen d'entraînement (non représenté) tel qu'un moteur.

Selon un mode de réalisation, l'un des moteurs des moyens d'entraînement, ou les deux, sont reliés à un dispositif de commande et d'asservissement (non représenté) qui est agencé pour leur appliquer un profil de vitesse prédéterminé.

A cet effet, le dispositif de commande peut comporter une mémoire, par exemple une mémoire informatique, dans laquelle un certain nombre de profils de vitesse sont préprogrammés, parmi lesquels l'un d'entre eux est choisi pour être appliqué à l'un des moteurs des moyens d'entraînement, ou parmi lesquels deux d'entre eux sont choisis pour être appliqués aux deux moteurs desdits moyens.

Selon un mode de réalisation, ledit moteur est un moteur dont la vitesse de rotation est réglable de façon continue, par exemple un moteur électrique, du type à courant continu sans balais.

L'on décrit à présent le parcours d'un ensemble de deux articles 2 consécutifs, l'un 2a étant dit amont, l'autre 2b aval, destinés à un même lot 4, depuis le poste, selon un réglage où l'installation 1 produit des packs de quatre articles (c'est-à-dire deux lots de deux articles).

Les deux articles 2a, 2b sont acheminés le long de la voie d'alimentation 8 à une vitesse constante VE jusqu'à la zone de transfert 5 où ils sont engagés par la roue étoilée 37 qui leur fait décrire une trajectoire en forme d'arc de cercle, toujours à vitesse constante VE, jusqu'au poste d'alimentation 9.

Ils sont alors simultanément désengagés par la roue étoilée 37 et engagés par la roue dentée 14, une dent 13 venant en prise avec l'article 2a amont à une vitesse égale à la vitesse d'entrée VE.

Les articles 2a, 2b subissent alors une accélération progressive sous l'effet de l'augmentation de la vitesse VT de la dent 13.

Cette accélération a pour effet de les grouper en un lot 4, tout en les espaçant des articles 2 suivants, non encore engagés par la roue dentée 14.

Les articles 2a, 2b décrivent alors une trajectoire sensiblement en forme d'arc de cercle suivant la périphérie de la roue 14, par exemple un quart de cercle, au bout de laquelle ils sont disposés sur la voie d'évacuation, à une vitesse égale à la vitesse de sortie VS.

Lors du changement de « pas machine» P (qui correspond à la distance séparant deux lots d'articles consécutifs), on procède au changement de roue dentée **14**, que l'on remplace:
- par une roue 14 comprenant un nombre inférieur de branches 20 pour une augmentation du pas P ; ou
- par une roue 14 comprenant un nombre supérieur de branches 20 pour une diminution du pas P.

## Revendications

1. Dispositif pour la constitution de lots (4) successifs d'articles (2), qui comprend :
- une voie d'alimentation (8) le long de laquelle les articles (2) sont acheminés un à un jusqu'à un poste d'alimentation (9) à une vitesse dite d'entrée (VE) sensiblement constante;
- une voie d'évacuation (10) apte à recevoir, à un poste d'évacuation (11), les lots (4) d'articles (2) successifs pour les acheminer à une vitesse dite de sortie (VS) supérieure à la vitesse d'entrée (VE) ;
- des moyens de transfert (12) des articles (2) depuis le poste d'alimentation (9) vers le poste d'évacuation (11), comprenant un organe rotatif apte à prendre et à grouper les articles (2) pour former des lots (4) espacés la vitesse de l'organe rotatif étant supérieure à la vitesse d'entrée (VE) des articles et l'organe rotatif permettant de faire varier le nombre d'articles par lot, ledit organe rotatif comprenant une roue dentée dont une partie (18) au moins est montée pivotante autour d'un axe (R) de rotation, cette roue étant disposée à proximité de la voie d'alimentation (8) et de la voie d'évacuation (10) et comprenant une succession d'organes de préhension (13) agencés pour engager les articles (2) au poste d'alimentation (9) et à les désengager au poste d'évacuation (11), lesdits organes de préhension étant entraînés en continu le long d'un chemin fermé, à une vitesse dite de transfert (VT), supérieure ou égale à la vitesse d'entrée (VE);
les moyens de transfert (12) étant agencés pour que la vitesse de transfert (VT) des organes de préhension (13) soit non constante, telle que:
- lors de l'engagement des articles (2), la vitesse (VT) des organes de préhension (13) soit sensiblement égale à la vitesse d'entrée (VE) ;
- lors du transfert des articles (2), la vitesse (VT) des organes de préhension (13) soit supérieure à la vitesse d'entrée (VE) ;
- lors du désengagement des articles (2), la vitesse (VT) des organes de préhension (13) soit sensiblement égale à la vitesse de sortie (VS) ;
**caractérisé en ce que** lesdits organes de préhension (13) se présentent sous la forme de dents (13) sensiblement régulièrement espacées, saillant radialement de la roue dentée (14), chaque dent décrivant un cercle en passant par une première position angulaire (θE) dans laquelle elle engage au moins un article (2) au poste d'alimentation (9), et une deuxième position angulaire (θS) dans laquelle elle désengage celui-ci au poste d'évacuation, les articles étant entraînés en continu le long dudit chemin fermé suivant une trajectoire qui suit au moins un quart de la périphérie de l'organe rotatif.

2. Dispositif selon la revendication 1, **caractérisé en ce que** l'écart angulaire entre les première et deuxième positions angulaires (θE, θS) est compris entre 90 et 180 degrés.

3. Dispositif selon la revendication 1 ou 2, **caractérisé en ce que** ladite roue dentée (14) comprend un socle fixe (11) circulaire ainsi qu'un disque rotatif (18), coaxiaux et superposés, entre lesquels sont disposées des branches (20) radiales dont les extrémités libres (23) forment les dites dents (13).

4. Dispositif selon la revendication 1, **caractérisé en ce que** les dites branches (20) sont montées à rotation sur le disque rotatif (18) au moyen de pivots (22) d'axes (R1) parallèles à l'axe (R) de la roue dentée (14).

5. Dispositif selon la revendication 4, **caractérisé en ce que** chaque branche (20) comporte un galet (24) ou un ergot qui coopère avec une gorge (25) ménagée dans le socle (11), cette gorge (25) étant étendue en boucle fermée autour de l'axe (R) de rotation de la roue dentée (14).

6. Dispositif selon la revendication 5, **caractérisé en ce que** la dite gorge (25) est agencée pour que:
- lors du passage de la dent (13) par le poste d'alimentation (9), la branche (20) qui la porte pivote dans le sens contraire de la rotation de la roue (14) pour que la vitesse (VT) de la dent (13) diminue jusqu'à être sensiblement égale à la vitesse d'entrée (VE) lors de l'engagement des articles (2) ;
- entre le poste d'alimentation (9) et le poste d'évacuation (11), l'orientation de ladite branche (20) étant constante par rapport à la roue (14) pour que la vitesse (VT) de la dent (13) augmente jusqu'à être sensiblement égale à la vitesse de la roue dentée (14), de sorte que les articles (2) sont groupés en lots (4), accélérés, espacés.

7. Dispositif selon la revendication 6, **caractérisé en ce que** la dite gorge (25) forme dans le socle (11) un chemin de came (26) continu suivi par le galet (24) qui forme suiveur de came, ce chemin de came (26) comprenant deux portions (21, 28) connexes dont l'une (21), tournée vers le poste d'évacuation (11), présente une courbure sensiblement constante, et l'autre (28), tournée vers le poste d'alimentation (9), présente une courbure variable, de sorte que:
- lors du passage du galet (24) dans la portion (28) à courbure constante, l'orientation de la branche (20) est sensiblement constante ;
- lors du passage du galet (24) dans la portion à courbure variable, la branche (20) qui le porte pivote autour de son axe (R1).

8. Dispositif selon l'une des revendications 3 à 7, **caractérisé en ce que** les dents (13) comprennent une surface de guidage (34) apte à coopérer avec une circonférence (36) du socle (11).

9. Dispositif selon l'une des revendications 1 à 8, **caractérisé en ce qu'**il comprend en outre des moyens (31) disposés à proximité du poste d'alimentation, aptes à ordonner et cadencer les articles (2) en provenance de la voie d'alimentation (8), pour qu'ils présentent le positionnement et l'écartement voulus au moment de leur préhension par les moyens de transfert (12).

10. Dispositif selon la revendication 9, **caractérisé en ce que** les moyens (31) pour ordonner et cadencer les articles se présentent sous la forme d'une roue étoilée (31), montée pivotante autour d'un axe de rotation (R'), comprenant à sa périphérie une denture (38) apte à engrener et désengrener les articles (2), la denture (38) présentant des logements (39) aptes à recevoir individuellement les articles (2), la vitesse tangentielle de la dite roue étoilée (31) étant sensiblement égale à la vitesse d'entrée (VE).

11. Dispositif selon la revendication 10, **caractérisé en ce qu'**il comprend un moyen d'entraînement de la dite roue étoilée, relié à un dispositif de commande agencé pour appliquer au dit moyen d'entraînement un profil de vitesse prédéterminé, choisi parmi un ensemble préprogrammé de profils de vitesses.

12. Dispositif selon l'une des revendications 1 à 11, **caractérisé en ce qu'**il comprend un moyen d'entraînement (15) de la roue dentée (14), relié à un dispositif de commande agencé pour appliquer au dit moyen d'entraînement (15) un profil de vitesse prédéterminé, choisi parmi un ensemble préprogrammé de profils de vitesse.

13. Dispositif selon la revendication 11 ou la revendication 12, **caractérisé en ce que** le dit moyen d'entraînement se présente sous la forme d'un moteur dont la vitesse de rotation est réglable de façon continue.

14. Dispositif selon la revendication 13, **caractérisé en ce que** le dit moteur est un moteur électrique, du type à courant continu sans balais.

## Claims

1. Device for the creation of successive batches (4) of articles (2), which comprises:
- an infeed belt (8) along which the articles (2) are led towards a feeding station (9) at a so-called entry speed (VE), which is approximately constant;
- an outfeed belt (10) that can receive, at an emptying station (11) successive batches (4) of articles (2) to convey them at a so-called exit speed (VS), which is higher than the entry speed (VE);
- means (12) for transferring the articles (2) from the feeding station (9) to the emptying station (11), comprising a rotating element that is capable of taking the articles (2) and grouping them together into spaced out batches (4), the speed of the rotating element being higher than the entry speed (VE) of the articles, and the rotating element making it possible to change the number of articles in each batch, said rotating element comprising a sprocket wheel, at least one part (18) of which is mounted such as to pivot about an axis (R) of rotation, this wheel being placed next to the infeed belt (8) and the outfeed belt (10) and comprising a succession of handling elements (13) arranged such as to engage the articles (2) at the feeding station (9) and release them at the emptying station (11), said handling elements being continuously driven along a closed circuit, at a so-called transfer speed (VT), which is higher than or equal to the entry speed (VE);
the transfer means (12) being arranged so that the transfer speed (VT) of the handling elements (13) is not constant, so that:
- during the engagement of the articles (2), the speed (VT) of the handling elements (13) is approximately equal to the entry speed (VE);
- during the transfer of the articles (2), the speed (VT) of the handling elements (13) is higher than the entry speed (VE);
- during the release of the articles (2), the speed (VT) of the handling elements (13) is approximately equal to the exit speed (VS);
**characterised in that** said handling elements (13) are presented in the form of teeth (13) spaced out at approximately regular intervals, projecting radially from the sprocket wheel (14), each tooth describing a circle passing through a first angular position (θE) in which it engages at least one article (2) at the feeding station (9), and a second angular position (θS) in which it releases the article at the emptying station, the articles being continuously driven along said closed circuit following a path that corresponds to at least one quarter of the periphery of the rotating element.

2. Device according to claim 1, **characterised in that** the angular deflection between the first and second angular positions (θE, θS) is comprised between 90 and 180 degrees.

3. Device according to claim 1 or 2, **characterised in that** said sprocket wheel (14) comprises a fixed circular base (11) as well as a rotating disc (18), which are coaxial and superimposed and between which radial arms (20) have been placed, whose free ends (23) form said teeth (13).

4. Device according to claim 3, **characterised in that** said arms (20) are rotatingly mounted on the rotating disc (18) by means of pivots (22) whose axes (R1) are parallel to the axis (R) of the sprocket wheel (14).

5. Device according to claim 4, **characterised in that** each arm (20) comprises a roller (24) or a lug that cooperates with a groove (25) made in the base (11), this groove (25) extending in a closed loop around the axis (R) of rotation of the sprocket wheel (14).

6. Device according to claim 5, **characterised in that** said groove (25) is arranged so that:
- when the tooth (13) passes by the feeding station (9), the arm (20) which carries it pivots in the opposite direction to the rotation of the wheel (14) in order for the speed (VT) of the tooth (13) to reduce until it is approximately equal to the entry speed (VE) when engaging the articles (2);
- between the feeding station (9) and the emptying station (11), the direction of said arm (20) is constant in relation to the wheel (14) in order for the speed (VT) of the tooth (13) to increase until it becomes approximately equal to the speed of the sprocket wheel (14), so that the articles (2) are grouped into batches (4), accelerated and spaced out.

7. Device according to claim 6, **characterised in that** said groove (25) forms a continuous cam race (26) in the base (11) followed by the roller (24) which forms a cam follower, this cam race (26) comprising two connected portions (21, 28) in which one (21), turned towards the emptying station (11), has a approximately constant curve, and the other (28), turned towards the feeding station (9), has a variable curve, so that:
- when the roller (24) passes by the portion (28) with the constant curve, the direction of the arm (20) is approximately constant;
- when the roller (24) passes by the portion with the variable curve, the arm (20) that carries it pivots around its axis (R1).

8. Device according to one of the claims from 3 to 7, **characterised in that** the teeth (13) comprise a guide track (34) that is capable of cooperating with a circumference (36) of the base (11).

9. Device according to one of the claims from 1 to 8, **characterised in that** it also comprises means (31) placed next to the feeding station, which are capable of sorting and giving rhythm to the articles (2) coming from the infeed belt (8), so that they can be in the desired position and distance at the time of their handling by the transfer means (12).

10. Device according to claim 9, **characterised in that** the means (31) for sorting and giving rhythm to the articles are presented in the form of a star wheel (31), mounted such as to pivot about an axis of rotation (R') comprising in its periphery a series of teeth (38) that can engage and release the articles (2), the teeth (38) having housings (39) that can accommodate each article (2) individually, the tangential speed of such star wheel (31) being approximately equal to the entry speed (VE).

11. Device according to claim 10, **characterised in that** it comprises means of driving said star wheel, linked to a control mechanism arranged to apply a predetermined speed profile, chosen from among a pre-programmed set of speed profiles, to said driving means.

12. Device according to one of the claims from 1 to 11, **characterised in that** it comprises means (15) for driving the sprocket wheel (14), linked to a control mechanism arranged to apply a given speed profile, selected from among a pre-programmed set of speed profiles, to such driving means (15).

13. Device according to claim 11 or claim 12, **characterised in that** said driving means are presented in the form of a motor with a continuously adjustable speed of rotation.

14. Device according to claim 13, **characterised in that** said motor is an electric motor, of the brushless direct-current type.

## Patentansprüche

1. Vorrichtung zur Bildung von Losen (4) aufeinander folgender Artikel (2), die Folgendes umfasst:
- eine Versorgungsstraße (8), an der entlang die Artikel (2) nacheinander bis zu einem Versorgungsposten (9) deutlich, in einer so genannten Eingangsgeschwindigkeit (VE) verbracht werden:
- eine zur Aufnahme um der Lose (4) von aufeinander folgenden Artikeln (2) einen Austragsposten (11) geeignete Austragsstraße (10) zwecks deren Verbringung bei einer so genannten Ausgangsgeschwindigkeit (VS), die höher ist als die Eingangsgeschwindigkeit (VE);
- Transfermittel (12) der Artikel (2) ab dem Versorgungsposten (9) zum Austragsposten (11) mit einem zur Aufnahme und zur Gruppierung der Artikel (2) geeigneten rotierenden Organ, um beabstandete Lose (4) zu bilden, wobei die Geschwindigkeit des rotierenden Organs höher ist als die Eingangsgeschwindigkeit (VE) der Artikel und das rotierende Organ die Abwandlung der Anzahl der Artikel pro Los erlaubt, wobei das genannte rotierende Organ ein Zahnrad umfasst, von dem wenigstens ein Teil (18) schwenkbar um eine Rotationsachse (R) angebracht ist, wobei dieses Zahnrad in der Nähe der Versorgungsstraße (8) und der Austragsstraße (10) angeordnet ist und eine Folge von zum Eingreifen der Artikel (2) am Versorgungsposten (9) und zu ihrer Freigabe am Austragsposten (11) angeordnete Greiforgane (13) umfasst, wobei die genannten Greiforgane kontinuierlich entlang eines geschlossenen Weges bei einer so genannten Transfergeschwindigkeit (VT) mitgenommen werden, die höher als oder gleich wie die Eingangsgeschwindigkeit (VE) ist;
wobei die Transfermittel (12) angeordnet sind, damit die Transfergeschwindigkeit (VT) der Greiforgane (13) nicht konstant ist, so dass:
- die Geschwindigkeit (VT) der Greiforgane (13) beim Eingreifen der Artikel (2) deutlich gleich der Eingangsgeschwindigkeit (VE) ist;
- die Geschwindigkeit (VT) der Greiforgane (13) beim Transfer der Artikel (2) höher ist als die Eingangsgeschwindigkeit (VE);
- die Geschwindigkeit (VT) der Greiforgane (13) bei der Freigabe der Artikel (2) deutlich gleich der Ausgangsgeschwindigkeit (VS) ist;
**dadurch gekennzeichnet, dass** die genannten Greiforgane (13) sich in Form von deutlich regelmäßig beabstandeten, radial aus dem Zahnrad (14) hervorstehenden Zähnen (13) darstellen,
wobei jeder Zahn beim Durchgang durch eine erste Winkelposition (θE), in der er wenigstens in einen Artikel (2) am Versorgungsposten (9) eingreift, einen Kreisbogen beschreibt, und durch eine zweite Winkelposition (θS), in der er diesen am Austragsposten freigibt, wobei die kontinuierlich entlang des genannten geschlossenen Weges mitgenommenen Artikel eine Bahn verfolgen, die wenigstens ein Viertel der Peripherie des rotierenden Organs verfolgt.

2. Vorrichtung gemäß Anspruch 1, **dadurch gekennzeichnet, dass** der Winkelabstand zwischen der ersten und der zweiten Winkelposition (θE, θS) zwischen 90 und 180 Grad inbegriffen ist.

3. Vorrichtung gemäß Anspruch 1 oder 2, **dadurch gekennzeichnet, dass** das genannte Zahnrad (14) einen festen kreisförmigen Sockel (11) sowie eine rotierende Scheibe (18) umfasst, die beide koaxial und übereinander gelagert sind und zwischen denen radiale Zweige (20) angeordnet sind, deren freie Enden (23) die genannten Zähne (13) bilden.

4. Vorrichtung gemäß Anspruch 3, **dadurch gekennzeichnet, dass** die genannten Zweige (20) rotierend auf der rotierenden Scheibe (18) mittels Angelpunkten (22) paralleler mit der Achse (R) des Zahnrades (14) Achsen (R1) angebracht sind.

5. Vorrichtung gemäß Anspruch 4, **dadurch gekennzeichnet, dass** jeder Zweig (20) eine Rolle (24) oder einen Vorsprung umfasst, der mit einer im Sockel (11) ausgesparten Auskehlung (25) zusammenwirkt, wobei diese Auskehlung (25) sich in geschlossener Schleife um die Rotationsachse (R) des Zahnrades (14) erstreckt.

6. Vorrichtung gemäß Anspruch 5, **dadurch gekennzeichnet, dass** die genannten Auskehlung (25) angeordnet ist, damit:
- der Zweig (20), der beim Durchgang des Zahns (13) durch den Versorgungsposten (9) Ersteren in der der Rotation des Rades (14) entgegen gesetzten Richtung trägt, schwenkt, damit die Geschwindigkeit (VT) des Zahns (13) sinkt, bis sie deutlich gleich der Eingangsgeschwindigkeit (VE) beim Eingreifen in die Artikel (2) ist,
- die Ausrichtung des genannten Zweiges (20) zwischen dem Versorgungsposten (9) und dem Austragsposten (11) im Verhältnis zum Rad (14) konstant ist, damit die Geschwindigkeit (VT) des Zahns (13) sich erhöht, bis sie deutlich gleich der Geschwindigkeit des Zahnrades (14) ist, so dass die Artikel (2) in beabstandeten, beschleunigten Losen (4) gruppiert werden.

7. Vorrichtung gemäß Anspruch 6, **dadurch gekennzeichnet, dass** die genannte Auskehlung (25) im Sockel (11) einen kontinuierlichen Nockenweg (26) bildet, auf den eine Rolle (24) folgt, die eine Nockennachführung bildet, wobei dieser Nockenweg (26) zwei konnexe Abschnitte (21, 28) bildet, von denen einer (21), der zum Austragsposten (11) ausgerichtet ist, eine deutlich konstante Krümmung aufweist, und der andere (28), der zum Versorgungsposten (9) ausgerichtet ist, eine variable Krümmung aufweist, so dass:
- die Ausrichtung des Zweiges (20) beim Durchgang der Rolle (24) in den Abschnitt (28) mit konstanter Krümmung deutlich konstant ist;
- der Zweig (20), der die Rolle (24) trägt, beim Durchgang derselben in den Abschnitt mit variabler Krümmung um seine Achse (R1) schwenkt.

8. Vorrichtung gemäß Anspruch 3 bis 7, **dadurch gekennzeichnet, dass** die Zähne (13) eine Führungsfläche (34) umfassen, die zum Zusammenwirken mit einem Umfang (36) des Sockels (11) geeignet ist.

9. Vorrichtung gemäß Anspruch 1 bis 8, **dadurch gekennzeichnet, dass** sie darüber hinaus in der Nähe des Versorgungspostens angeordnete Mittel (31) umfasst, die geeignet sind, die aus der Versorgungsstraße (8) stammenden Artikel (2) zu steuern und zu takten, damit sie die zum Zeitpunkt ihres Ergreifens durch die Transfermittel (12) gewünschte Positionierung und Beabstandung aufweisen.

10. Vorrichtung gemäß Anspruch 9, **dadurch gekennzeichnet, dass** die Mittel (31) zum Steuern und Takten der Artikel sich in Form eines schwenkbar um eine Rotationsachse (R') angebrachten, an seiner Peripherie eine zum Erfassen und Lösen der Artikel (2) geeignete Zahnung (38) umfassenden gesternten Rades (31) darstellen, wobei die Zahnung (38) zur individuellen Aufnahme der Artikel (2) geeignete Aufnahmen (39) aufweist, wobei die tangentiale Geschwindigkeit des genannten gesternten Rades (31) deutlich gleich der Eingangsgeschwindigkeit (VE) ist.

11. Vorrichtung gemäß Anspruch 10, **dadurch gekennzeichnet, dass** sie ein mit einer zur Anwendung eines aus einer vorprogrammierten Gruppe von Geschwindigkeitsprofilen gewählten vorbestimmten Geschwindigkeitsprofils auf das genannte Mitnahmemittel angeordnete Steuereinrichtung verbundenes Mitnahmemittel des genannten gesternten Rades umfasst.

12. Vorrichtung gemäß Anspruch 1 bis 11, **dadurch gekennzeichnet, dass** es ein mit einer zur Anwendung eines aus einer vorprogrammierten Gruppe von Geschwindigkeitsprofilen gewählten vorbestimmten Geschwindigkeitsprofils auf das genannte Mitnahmemittel (15) angeordnete Steuervorrichtung verbundenes Mitnahmemittel (15) des Zahnrades (14) umfasst.

13. Vorrichtung gemäß Anspruch 11 oder Anspruch 12, **dadurch gekennzeichnet, dass** das genannte Mitnahmemittel sich in Form eines Motors darstellt, dessen Rotationsgeschwindigkeit kontinuierlich geregelt ist.

14. Vorrichtung gemäß Anspruch 13, **dadurch gekennzeichnet, dass** der genannte Motor ein Elektromotor vom Typ Gleichstrom ohne Schleifkontakt ist.
